# EUROPEAN PATENT APPLICATION

(11) **EP 4 756 229 A1**
(43) Date of publication of application: **10.06.2026**
(21) Application number: 25849695.9
(22) Date of filing: 24.09.2025
(51) Int. Cl.: F04C 29/04, F04C 18/32, F04C 29/12, F16K 15/16

(54) **ROTARY COMPRESSOR AND REFRIGERATION CYCLE DEVICE**

(30) Priority: 26.09.2024 JP 2024167773; 10.09.2025 JP 2025150589
(71) Applicant: DAIKIN INDUSTRIES, LTD., Osaka-Shi, Osaka 530-0001 (JP)
(72) Inventor: UENO Hiromichi, Osaka-shi, Osaka 530-0001 (JP); KIKUTAKE Daiki, Osaka-shi, Osaka 530-0001 (JP); MASUDA Naoki, Osaka-shi, Osaka 530-0001 (JP)
(74) Representative: Goddar, Heinz J.
(86) International application number: PCT/JP2025/033533
(87) International publication number: WO 2026/070838

(57) **Abstract**

The first surface (51) includes a valve seat surface (58) that is in contact with the tip portion (72) of the reed valve (70) in a closed state and a groove (59) that is formed around the valve seat surface (58) and overlaps an outer edge (72a) of the tip portion (72) as viewed in a second direction. The first surface (51) has a contact surface (75) that is configured to be in contact with the movable portion (73) of the reed valve (70) in the closed state.

## Description

### TECHNICAL FIELD

The present disclosure relates to a rotary compressor and a refrigeration cycle apparatus including the rotary compressor. The rotary compressor is a compressor that compresses gas in a compression chamber formed in a cylinder by eccentrically rotating a roller in the cylinder. The rotary compressor generally has a vane for partitioning a cylinder chamber into a suction chamber and a compression chamber. There are various types of rotary compressors, such as a so-called rolling piston compressor in which a roller eccentrically rotates while a vane separated from the roller abuts on the roller, a so-called swing compressor in which a vane integrally formed with the roller swings with the eccentric rotation of the roller, and a so-called hinge vane compressor in which the roller eccentrically rotates with a tip of the vane rotatably fitted with an outer peripheral surface of the roller.

### BACKGROUND ART

The rotary compressor disclosed in Patent Document 1 has an injection mechanism for introducing a refrigerant into the compressor. The injection mechanism includes a flow path for sending the refrigerant flowing through an injection pipe to the compression chamber, a valve chamber formed in the flow path, a reed valve disposed in the valve chamber, and a valve retainer for regulating the operation of the reed valve. When the reed valve opens an outflow port that opens to the valve chamber, the refrigerant in the injection pipe is introduced into the compression chamber.

### CITATION LIST

### PATENT DOCUMENT

Patent Document 1: Chinese Patent Publication No. 103557158

### SUMMARY OF THE INVENTION

### TECHNICAL PROBLEM

If the reed valve of the injection mechanism opens too early, the injection pipe and the suction port of the compression mechanism may communicate with each other via the cylinder chamber. In this case, the refrigerant flows back to the suction port. This lowers the volumetric efficiency of the compressor.

An object of the present disclosure is to suppress the flow of a refrigerant that is introduced from the injection mechanism into the cylinder chamber, toward the suction port.

### SOLUTION TO THE PROBLEM

A first aspect is directed to a rotary compressor. The rotary compressor includes a drive shaft (7), a compression mechanism (10), an oil supply mechanism (8) configured to supply oil to a cylinder chamber (15, 25), and an injection pipe (39). The compression mechanism (10) includes an annular cylinder (11, 21), a roller (12, 22) configured to be driven by the drive shaft (7) and eccentrically rotate in the cylinder (11, 21), a vane (13, 23) configured to partition a cylinder chamber (15, 25) between the cylinder (11, 21) and the roller (12, 22) into a suction chamber (15a, 25a) and a compression chamber (15b, 25b), and a suction port (17, 27) configured to send a low-pressure refrigerant to the suction chamber (15a, 25a). The compression mechanism (10) is provided with an injection mechanism (40) configured to introduce a refrigerant into the compression chamber (15b, 25b). The injection mechanism (40) includes: a valve chamber (50); a first flow path (42, 43) that is configured to allow the injection pipe (39) and the valve chamber (50) to communicate with each other and has an outflow port (44) facing the valve chamber (50); a reed valve (70) that is disposed in the valve chamber (50) and configured to open and close the outflow port (44) of the first flow path (42, 43); a valve retainer (60) that is disposed in the valve chamber (50) and configured to regulate an operation of the reed valve (70); and a second flow path (45) that is configured to allow the valve chamber (50) and the cylinder chamber (15, 25) to communicate with each other. The reed valve (70) extends in a first direction and has a thickness in a second direction. The reed valve (70) includes a base portion (71) that is formed at one end of the reed valve (70) in the first direction and fixed to the valve retainer (60), a tip portion (72) that is formed at the other end of the reed valve (70) in the first direction and configured to open and close the outflow port (44), and a movable portion (73) that is configured to connect the base portion (71) and the tip portion (72) and is movable toward the valve retainer (60) together with the tip portion (72). An inner surface forming the valve chamber (50) has a first surface (51) facing the valve retainer (60) in the second direction across the reed valve (70) and having the outflow port (44). The first surface (51) includes a valve seat surface (58) that is configured to be in contact with the tip portion (72) of the reed valve (70) in a closed state and a groove (59) that is formed around the valve seat surface (58) and overlaps an outer edge (72a) of the tip portion (72) as viewed in the second direction. A point at an end of the tip portion (72) on the other end side of the reed valve (70) in the first direction is defined as a first point (a1), a distance from a center (P) of the outflow port (44) to the first point (a1) in the first direction is defined as a first distance (D1), and a point away from the center (P) of the outflow port (44) toward an end of the tip portion (72) on the one end side of the reed valve (70) in the first direction by the first distance (D1) is defined as a second point (a2) as viewed in the second direction. The tip portion (72) is formed in an area of the reed valve (70) from the first point (a1) to the second point (a2). The first surface (51) has a contact surface (75) that is configured to be in contact with the movable portion (73) of the reed valve (70) in the closed state.

In the first aspect, the oil supply mechanism (8) supplies oil to the cylinder chamber (15, 25). When the reed valve (70) is in the closed state, the oil in the cylinder chamber (15, 25) flows into the valve chamber (50) through the second flow path (45) of the injection mechanism (40). The first surface (51) of the valve chamber (50) has a contact surface (75) that is in contact with the movable portion (73) of the reed valve (70). Oil is present between the movable portion (73) of the reed valve (70) in the closed state and the contact surface (75). Thus, when the reed valve (70) opens, the movable portion (73) is less likely to move toward the valve retainer (60) due to the surface tension of the oil, and the timing of opening the reed valve (70) can be delayed. This can suppress the communication between the second flow path (45) and the suction port (17, 27) through the cylinder chamber (15, 25), supprssing the flow of the refrigerant introduced from the injection mechanism (40) toward the suction port.

A second aspect is an embodiment of the first aspect. In the second aspect, the groove (59) surrounds the entire circumference of the valve seat surface (58).

In the second aspect, the groove (59) is formed in the first surface (51) of the valve chamber (50) to surround the entire circumference of the valve seat surface (58). The groove (59) overlaps the outer edge (72a) of the tip portion (72) of the reed valve (70) as viewed in the second direction. Thus, when the open reed valve (70) is closed, contact of the outer edge (72a) of the tip portion (72) with the first surface (51) can be suppressed. This can reduce fatigue failure of the tip portion (72) due to repeated opening and closing of the reed valve (70).

A third aspect is an embodiment of the first or second aspect. In the third aspect, the contact surface (75) is configured to be in contact with a predetermined portion of the movable portion (73) from an intermediate point (a3) which is a half point in the first direction of the movable portion (73) of the reed valve (70) in the closed state to the tip portion (72).

In the third aspect, the contact surface (75) is in contact with a portion of the movable portion (73) closer to the tip portion (72). Thus, when the reed valve (70) opens, a contact portion between the movable portion (73) and the contact surface (75) is farther from the base portion (71) serving as the fulcrum of the movable portion (73). This can delay the timing of opening the reed valve (70).

A fourth aspect is an embodiment of any one of the first to third aspects. In the fourth aspect, a first length (L1) which is an entire length of the contact surface (75) in the first direction is greater than 1/2 of a second length (L2) which is an entire length of the movable portion (73) in the first direction.

In the fourth aspect, the area of the contact surface (75) increases, and thus the timing of opening the reed valve (70) can be particularly delayed.

A fifth aspect is an embodiment of any one of the first to fourth aspects. In the fifth aspect, the refrigerant is carbon dioxide.

In the fifth aspect, the refrigerant in the valve chamber (50) has a relatively high pressure, and the volumetric efficiency of the compressor (1) tends to decrease if the valve chamber (50) has a dead volume. In this aspect, the contact surface (75) is formed on the first surface (51) of the valve chamber (50), reducing the region of the groove (59) formed in the first surface (51). This can minimize a significant decrease of the volumetric efficiency due to the dead volume of the groove (59).

A sixth aspect is directed to a refrigeration cycle apparatus. The refrigeration cycle apparatus includes a refrigerant circuit (101) including the rotary compressor (1) of any one of the first to fifth aspects.

### BRIEF DESCRIPTION OF THE DRAWINGS

[FIG. 1] FIG. 1 is a piping diagram illustrating a configuration of a refrigeration cycle apparatus according to an embodiment.
[FIG. 2] FIG. 2 is a longitudinal cross-sectional view of a compressor according to the embodiment.
[FIG. 3] FIG. 3 is an enlarged view of a compression mechanism shown in FIG. 2.
[FIG. 4] FIG. 4 is a cross-sectional view of the compression mechanism taken along line IV-IV shown in FIG. 3, with a first roller at a rotational angle of 90°.
[FIG. 5] FIG. 5 is a cross-sectional view of the compression mechanism taken along line V-V shown in FIG. 3, with a second roller at a rotational angle of 270°.
[FIG. 6] FIG. 6 is an enlarged longitudinal cross-sectional view of a main part of an injection mechanism.
[FIG. 7] FIG. 7 is a plan view of a cylinder and an injection element as viewed in an axial direction.
[FIG. 8] FIG. 8 is an exploded perspective view of a major part of the injection element.
[FIG. 9] FIG. 9 is a plan view of a valve retainer, a reed valve, and a valve chamber as viewed in a second direction.
[FIG. 10] FIG. 10 is a cross-sectional view of the injection element as viewed in the third direction, with the reed valve in a closed state.
[FIG. 11] FIG. 11 is a cross-sectional view of the injection element as viewed in the third direction, with the reed valve in an open state.
[FIG. 12] FIG. 12 is a plan view of the reed valve and the valve chamber as viewed in the second direction.
[FIG. 13] FIG. 13 is a plan view of a reed valve and a valve chamber according to a first variation as viewed in the second direction.
[FIG. 14] FIG. 14 is a plan view of a reed valve and a valve chamber according to a second variation as viewed in the second direction.

### DESCRIPTION OF EMBODIMENTS

Embodiments will be described. A compressor (1) of the present embodiment is applied to an air conditioner (100). The air conditioner (100) is an example of a refrigeration cycle apparatus that performs a vapor compression refrigeration cycle.

### -Air Conditioner-

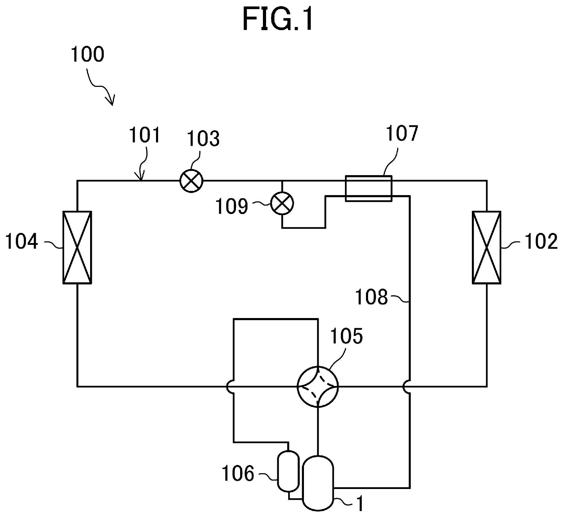

As illustrated in FIG. 1, the air conditioner (100) includes a refrigerant circuit (101). The refrigerant circuit (101) includes a compressor (1), an outdoor heat exchanger (102), an expansion valve (103), an indoor heat exchanger (104), a four-way switching valve (105), an accumulator (106), an internal heat exchanger (107), an intermediate flow path (108), and a control valve (109). The expansion valve (103) is an example of a decompression mechanism. The decompression mechanism may be a capillary tube.

The internal heat exchanger (107) exchanges heat between the refrigerant that has passed through the outdoor heat exchanger (102) and the refrigerant that has passed through the control valve (109) in the intermediate flow path (108). An inlet end of the intermediate flow path (108) is connected between the internal heat exchanger (107) and the expansion valve (103). An outlet end of the intermediate flow path (108) communicates with the compression chamber of the compressor (1).

The four-way switching valve (105) switches between a first state indicated by solid lines in FIG. 1 and a second state indicated by broken lines in FIG. 1 so that the air conditioner (100) switches between a cooling operation and a heating operation. In the cooling operation, the four-way switching valve (105) in the first state allows the discharge side of the compressor (1) to communicate with the outdoor heat exchanger (102) and allows the suction side of the compressor (1) to communicate with the indoor heat exchanger (104). In the heating operation, the four-way switching valve (105) in the second state allows the discharge side of the compressor (1) to communicate with the indoor heat exchanger (104) and allows the suction side of the compressor (1) to communicate with the outdoor heat exchanger (102).

### <Operation of Air Conditioner>

The air conditioner (100) performs the cooling operation and the heating operation. In the cooling operation, the four-way switching valve (105) is set to the first state, and the refrigerant circulates through the refrigerant circuit (101). In the refrigerant circuit (101), the outdoor heat exchanger (102) functions as a radiator, and the indoor heat exchanger (104) functions as an evaporator. The air cooled by the indoor heat exchanger (104) is supplied to an indoor space.

In the heating operation, the four-way switching valve (105) is set to the second state, and the refrigerant circulates in the refrigerant circuit (101). In the refrigerant circuit (101), the indoor heat exchanger (104) functions as a radiator, and the outdoor heat exchanger (102) functions as an evaporator. The air heated by the indoor heat exchanger (104) is supplied to the indoor space.

In the cooling operation, the refrigerant diverted to the intermediate flow path (108) is decompressed to an intermediate pressure by the control valve (109). The refrigerant that has passed through the control valve (109) passes through the internal heat exchanger (107), and is then introduced into the compression chamber of the compressor (1).

### -Configuration of Compressor-

The compressor (1) will be described in detail. In the following description, an "axial direction" indicates the direction in which the axis of the drive shaft (7) extends, a "radial direction" indicates the direction that is orthogonal to the axial direction and extends radially from the axis of the drive shaft (7), and a "rotational direction" indicates the direction in which the drive shaft (7) rotates.

The compressor (1) is a rotary compressor. The compressor (1) of the present embodiment is a so-called swing rotary compressor having a vane that is formed integrally with a roller and swings in accordance with eccentric rotation of the roller.

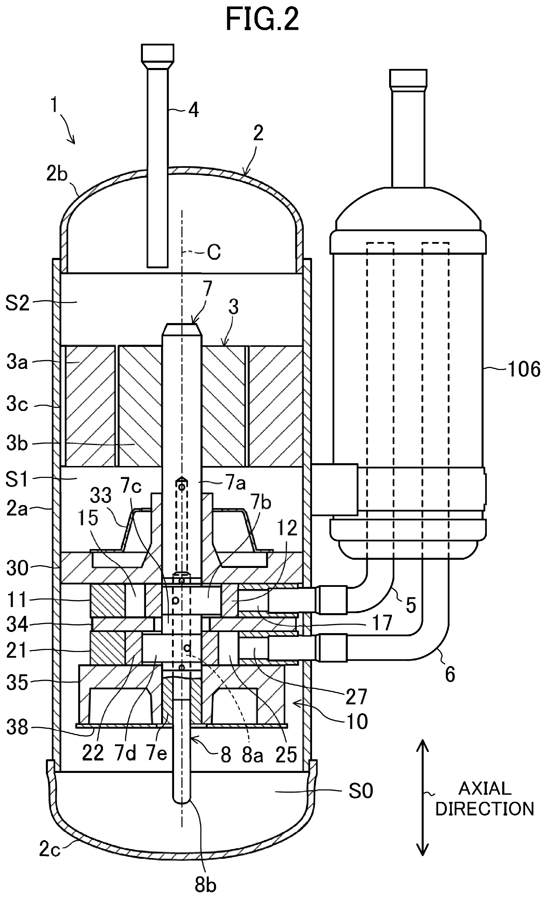

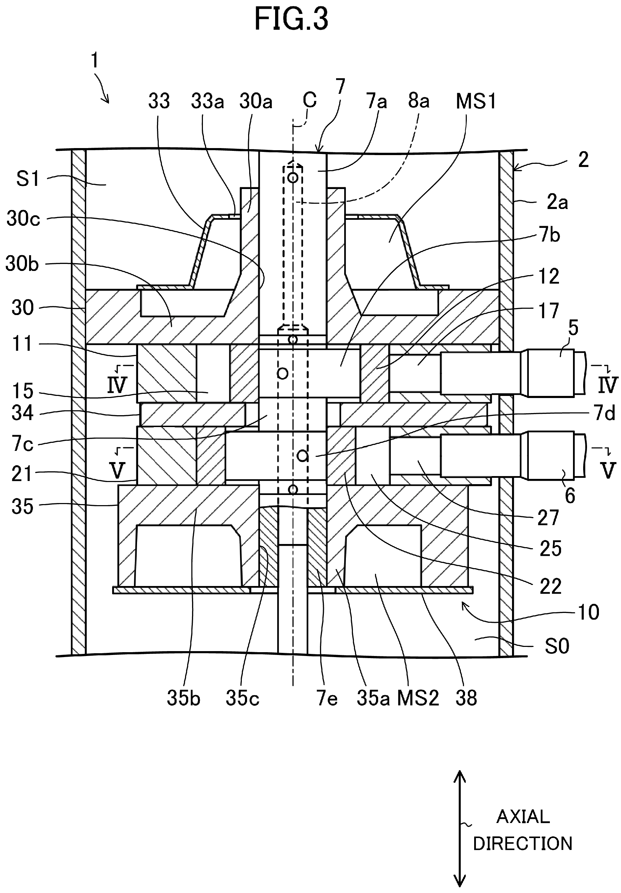

As illustrated in FIGS. 2 and 3, the compressor (1) includes a casing (2), the drive shaft (7), and the compression mechanism (10). The motor (3), the drive shaft (7), and the compression mechanism (10) are housed in the casing (2). The compression mechanism (10) is disposed below the motor (3).

### <Casing>

As illustrated in FIG. 2, the casing (2) is a vertically elongated cylindrical sealed container. The casing (2) includes a cylindrical barrel (2a), a top (2b) closing an upper end of the barrel (2a), and a bottom (2c) closing a lower end of the barrel (2a). An oil reservoir space (S0) is formed in a lower portion of the casing (2). The oil reservoir space (S0) is formed between the bottom (2c) and a lower portion of the barrel (2a). The oil reservoir space (S0) stores oil (refrigerating machine oil) for lubricating sliding portions of the compressor (1).

The compressor (1) is a so-called high-pressure dome compressor. In other words, an internal space of the casing (2) is filled with the refrigerant discharged from the compression mechanism (10). The internal space of the casing (2) includes a primary space (S1) between the compression mechanism (10) and the motor (3) and a secondary space (S2) above the motor (3).

### <Motor>

The motor (3) rotationally drives the drive shaft (7). The motor (3) is disposed in an upper portion of the internal space of the casing (2). The motor (3) includes a stator (3a) and a rotor (3b) disposed inside the stator (3a). The stator (3a) is fixed to an inner peripheral surface of the barrel (2a) of the casing (2) by shrink fitting or welding. The rotor (3b) is attached to the drive shaft (7). The compressor (1) is a so-called inverter compressor. The motor (3) is configured to have a variable operation frequency (rotational speed).

A stator groove (3c) (so-called core cut) is formed in an outer peripheral surface of the stator (3a) from one end to the other end in the axial direction. The primary space (S1) and the secondary space (S2) communicate with each other through the stator groove (3c) and a gap between the stator (3a) and the rotor (3b). The stator groove (3c) functions as a path for returning the oil in the secondary space (S2) to the oil reservoir space (S0).

### <Drive Shaft>

The drive shaft (7) connects the motor (3) and the compression mechanism (10). The drive shaft (7) rotates about its axis (C). The drive shaft (7) includes a main shaft portion (7a), a first eccentric portion (7b), an intermediate shaft portion (7c), a second eccentric portion (7d), and an auxiliary shaft portion (7e) arranged in this order from the top to the bottom. The main shaft portion (7a), the first eccentric portion (7b), the intermediate shaft portion (7c), the second eccentric portion (7d), and the auxiliary shaft portion (7e) are integrally formed.

Each of the first eccentric portion (7b) and the second eccentric portion (7d) is eccentric with respect to the axis (C). The direction of eccentricity of the first eccentric portion (7b) relative to the axis (C) is different by 180° from the direction of eccentricity of the second eccentric portion (7d) relative to the axis (C) in the rotational direction of the drive shaft (7).

The drive shaft (7) is provided with an oil supply mechanism (8). The oil supply mechanism (8) includes an in-shaft flow path (8a) formed inside the drive shaft (7) and a pump (8b) provided at the bottom end of the drive shaft (7). An inlet end of the in-shaft flow path (8a) is connected to the pump (8b). The pump (8b) pumps up the oil in the oil reservoir space (S0) and supplies the oil to the sliding portions of the compression mechanism (10) through the in-shaft flow path (8a). A centrifugal pump constitutes the pump (8b). The pump (8b) may be a positive-displacement pump.

### <Discharge Pipe and Suction Pipe>

The compressor (1) includes a discharge pipe (4), a first suction pipe (5), and a second suction pipe (6). The discharge pipe (4) is attached to the top (2b). The discharge pipe (4) penetrates the top (2b). The first suction pipe (5) and the second suction pipe (6) are attached to the lower portion of the barrel (2a). The first suction pipe (5) and the second suction pipe (6) penetrate the barrel (2a). The first suction pipe (5) is located above the second suction pipe (6).

The accumulator (106) is connected to the first suction pipe (5) and the second suction pipe (6). The accumulator (106) is a cylindrical sealed container. The accumulator (106) separates the inflowing refrigerant into a gas refrigerant and a liquid refrigerant.

### -Configuration of Compression Mechanism-

The compression mechanism (10) compresses the refrigerant sucked through the first suction pipe (5) and the second suction pipe (6), and discharges the compressed refrigerant to the internal space of the casing (2).

The compression mechanism (10) includes a first bearing (30), a first cylinder (11), an intermediate plate (34), a second cylinder (21), and a second bearing (35). In the compression mechanism (10), the first bearing (30), the first cylinder (11), the intermediate plate (34), the second cylinder (21), and the second bearing (35) are arranged in this order from the top to the bottom.

As illustrated in FIGS. 2 to 5, the compression mechanism (10) is a two-cylinder compression mechanism including a first cylinder (11) and a second cylinder (21). The compression mechanism (10) is a two-cylinder single-stage compression mechanism that compresses a low-pressure refrigerant in each of the first cylinder (11) and the second cylinder (21). A first roller (12), a first vane (13), and a pair of first bushings (14) are disposed in a space inside the first cylinder (11). A second roller (22), a second vane (23), and a pair of second bushings (24) are disposed in a space inside the second cylinder (21). The cylinders, the rollers, the vanes, and the pairs of bushings are merely examples, and the number of these components is not limited to two.

The compression mechanism (10) is directly or indirectly fixed to the barrel (2a) of the casing (2). In this embodiment, the first bearing (30) is directly fixed to the barrel (2a) of the casing (2) by welding. The first cylinder (11), the intermediate plate (34), the second cylinder (21), and the second bearing (35) are fixed to the first bearing (30) with bolts (not shown). The first bearing (30) may be indirectly welded to the barrel (2a) of the casing (2) with another member fixed to the first bearing (30).

### <Cylinder>

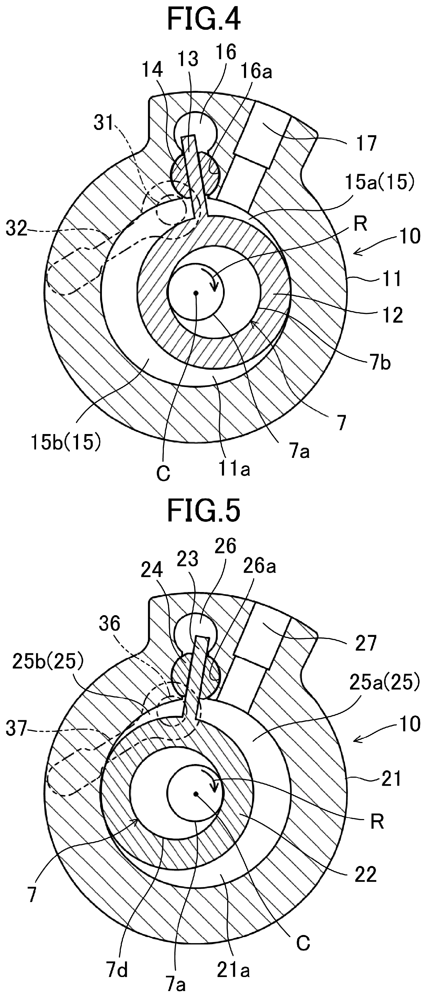

Each of the first cylinder (11) and the second cylinder (21) is an annular member. As illustrated in FIG. 4, the first cylinder (11) is formed with a first circular hole (11a), a first vane receiving hole (16), and a first suction port (17). As illustrated in FIG. 5, the second cylinder (21) is provided with a second circular hole (21a), a second vane receiving hole (26), and a second suction port (27).

The first circular hole (11a) is formed to penetrate the first cylinder (11) in the axial direction. The first circular hole (11a) is defined by an inner peripheral surface of the first cylinder (11). The first circular hole (11a) houses the first roller (12). The first cylinder chamber (15) is defined by the inner peripheral surface of the first cylinder (11), an outer peripheral surface of the first roller (12), a side surface of the first vane (13), the first bearing (30), and the intermediate plate (34).

The second circular hole (21a) is formed to penetrate the second cylinder (21) in the axial direction. The second circular hole (21a) is defined by an inner peripheral surface of the second cylinder (21). The second circular hole (21a) houses the second roller (22). The second cylinder chamber (25) is defined by the inner peripheral surface of the second cylinder (21), an outer peripheral surface of the second roller (22), a side surface of the second vane (23), the second bearing (35), and the intermediate plate (34).

The first vane receiving hole (16) extends outward from the first circular hole (11a) of the first cylinder (11) in the radial direction of the first cylinder (11). The first vane receiving hole (16) penetrates the first cylinder (11) in the axial direction. The first vane receiving hole (16) receives the first vane (13). The first vane receiving hole (16) includes a first bushing hole (16a) into which the pair of first bushings (14) fits.

The second vane receiving hole (26) extends outward from the second circular hole (21a) of the second cylinder (21) in the radial direction of the second cylinder (21). The second vane receiving hole (26) penetrates the second cylinder (21) in the axial direction. The second vane receiving hole (26) receives the second vane (23). The second vane receiving hole (26) includes a second bushing hole (26a) into which the pair of second bushings (24) fits.

The first suction port (17) is located near the first vane receiving hole (16). The first suction port (17) penetrates the first cylinder (11) in the radial direction. The first suction port (17) communicates with the first cylinder chamber (15). The first suction pipe (5) is connected to the first suction port (17). The second suction port (27) is located near the second vane receiving hole (26). The second suction port (27) penetrates the second cylinder (21) in the radial direction. The second suction port (27) communicates with the second cylinder chamber (25). The second suction pipe (6) is connected to the second suction port (27).

### <First Bearing>

The first bearing (30) is disposed above the first cylinder (11). The first bearing (30) includes a tubular first boss portion (30a) and a first flange portion (30b) extending radially outward from the first boss portion (30a). The first boss portion (30a) and the first flange portion (30b) are integrally formed. The first bearing (30) constitutes a closing member that closes the first cylinder chamber (15) in the axial direction.

The first bearing (30) has an insertion hole penetrating the first boss portion (30a) in the axial direction. The main shaft portion (7a) is inserted into the insertion hole. An inner peripheral surface of the first bearing (30) defining the insertion hole constitutes a first sliding surface (30c) with which the drive shaft (7) is in contact.

As illustrated in FIG. 4, the first flange portion (30b) is provided with a first discharge port (31). The first discharge port (31) penetrates the first flange portion (30b) in the thickness direction. The first discharge port (31) is located across the first vane receiving hole (16) from the first suction port (17) when viewed in the axial direction.

The first flange portion (30b) is provided with a first discharge valve (32) that opens and closes the first discharge port (31). The first discharge valve (32) is a reed valve. The first discharge valve (32) periodically opens and closes in accordance with the pressure of a first compression chamber (15b) described later.

As illustrated in FIG. 2, the compression mechanism (10) is provided with a first muffler (33). A first muffler space (MS1) is formed between the first muffler (33) and the first bearing (30). The first muffler space (MS1) communicates with the first discharge port (31). The first muffler (33) has a first muffler opening (33a) that allows the first muffler space (MS1) and a space outside the first muffler (33) (primary space (S1)) to communicate with each other.

### <Second Bearing>

The second bearing (35) is disposed below the second cylinder (21). The second bearing (35) includes a tubular second boss portion (35a) and a second flange portion (35b) extending radially outward from the second boss portion (35a). The second boss portion (35a) and the second flange portion (35b) are integrally formed. The second bearing (35) constitutes a closing member that closes the second cylinder chamber (25) in the axial direction.

The second bearing (35) has an insertion hole penetrating the second boss portion (35a) in the axial direction. The auxiliary shaft portion (7e) is inserted into the insertion hole. An inner peripheral surface of the second bearing (35) defining the insertion hole constitutes a second sliding surface (35c) with which the drive shaft (7) is in contact.

As illustrated in FIG. 5, the second flange portion (35b) is provided with a second discharge port (36). The second discharge port (36) penetrates the second flange portion (35b) in the thickness direction. The second discharge port (36) is located across the second vane receiving hole (26) from the second suction port (27) when viewed in the axial direction.

The second flange portion (35b) is provided with a second discharge valve (37) that opens and closes the second discharge port (36). The second discharge valve (37) is a reed valve. The second discharge valve (37) periodically opens and closes in accordance with the pressure of a second compression chamber (25b) described later.

As illustrated in FIG. 2, the compression mechanism (10) is provided with a second muffler (38). A second muffler space (MS2) is formed between the second muffler (38) and the second bearing (35). The second muffler space (MS2) communicates with the second discharge port (36). The second muffler space (MS2) communicates with the first muffler space (MS1) through an internal flow path formed in the compression mechanism (10).

### <Intermediate Plate>

The intermediate plate (34) is disposed between the first cylinder (11) and the second cylinder (21). The intermediate plate (34) covers one end (lower end) of the first cylinder chamber (15) and the one end (upper end) of the second cylinder chamber (25). The intermediate plate (34) constitutes a closing member that closes the first cylinder chamber (15) and the second cylinder chamber (25) in the axial direction.

A circular hole is formed in a central portion of the intermediate plate (34) to penetrate the intermediate plate (34) in the axial direction. The drive shaft (7) passes through the circular hole of the intermediate plate (34).

### <Roller>

Each of the first roller (12) and the second roller (22) is an annular member. The first eccentric portion (7b) of the drive shaft (7) is inserted in a space inside the first roller (12). The first roller (12) is driven by the drive shaft (7) to rotate eccentrically. An outer peripheral surface of the first roller (12) and an inner peripheral surface of the first cylinder (11) are in contact with each other. The second eccentric portion (7d) of the drive shaft (7) is inserted in a space inside the second roller (22). The second roller (22) is driven by the drive shaft (7) to rotate eccentrically. An outer peripheral surface of the second roller (22) and an inner peripheral surface of the second cylinder (21) are in contact with each other.

When the rollers (12, 22) rotate eccentrically, the rotational angle of each roller (12, 22) changes. The rotational angle of the roller (12, 22) closest to the vane receiving hole (16, 26) as viewed in the axial direction is defined as a reference angle (rotational angle = 0°).

### <Vane>

The first vane (13) and the second vane (23) are plate-shaped members. The first vane (13) is integrally formed with the first roller (12). The first vane (13) extends outward from the outer peripheral surface of the first roller (12) in the radial direction of the first cylinder (11). The second vane (23) is integrally formed with the second roller (22). The second vane (23) extends outward from the outer peripheral surface of the second roller (22) in the radial direction of the second cylinder (21).

The first vane (13) fits into the first vane receiving hole (16) of the first cylinder (11). The first vane (13) partitions the first cylinder chamber (15) into a first compression chamber (15b) and a first suction chamber (15a). When viewed in the axial direction, the first suction chamber (15a) is formed near the first suction port (17), and the first compression chamber (15b) is formed near the first discharge port (31).

The second vane (23) fits into the second vane receiving hole (26) of the second cylinder (21). The second vane (23) partitions the second cylinder chamber (25) into a second suction chamber (25a) and a second compression chamber (25b). When viewed in the axial direction, the second suction chamber (25a) is formed near the second suction port (27), and the second compression chamber (25b) is formed near the second discharge port (36).

### <Bushing>

The pair of first bushings (14) and the pair of second bushings (24) are substantially semi-cylindrical members. Flat surfaces of the pair of first bushings (14) face each other. Flat surfaces of the pair of second bushings (24) face each other.

The pair of first bushings (14) fits into the first bushing hole (16a), with the first vane (13) sandwiched between them. The first vane (13) swings back and forth together with the first bushings (14). At the same time, the first vane (13) reciprocates along the flat surfaces of the pair of first bushings (14).

The pair of second bushings (24) fits into the second bushing hole (26a), with the second vane (23) sandwiched between them. The second vane (23) swings back and forth together with the second bushings (24). At the same time, the second vane (23) reciprocates along the flat surfaces of the pair of second bushings (24).

### -Operation of Compressor-

When the motor (3) is energized, the drive shaft (7) is driven by the motor (3). The drive shaft (7) rotates in the direction indicated by an arrow R shown in FIGS. 4 and 5. When the drive shaft (7) rotates, the first roller (12) eccentrically rotates along the inner peripheral surface of the first cylinder (11), and at the same time, the second roller (22) eccentrically rotates along the inner peripheral surface of the second cylinder (21).

The gas refrigerant that has passed through the first suction pipe (5) is sucked into the first suction chamber (15a) through the first suction port (17). When the first roller (12) rotates eccentrically and the first suction chamber (15a) is blocked from the first suction port (17), the first compression chamber (15b) is formed. The first roller (12) further rotates eccentrically to compress the refrigerant in the first compression chamber (15b).

The gas refrigerant that has passed through the second suction pipe (6) is sucked into the second suction chamber (25a) through the second suction port (27). When the second roller (22) rotates eccentrically and the second suction chamber (25a) is blocked from the second suction port (27), the second compression chamber (25b) is formed. The second roller (22) further rotates eccentrically to compress the refrigerant in the second compression chamber (25b).

The refrigerant compressed in the first compression chamber (15b) is discharged from the first discharge port (31) to the first muffler space (MS1). The refrigerant compressed in the second compression chamber (25b) is discharged from the second discharge port (36) to the second muffler space (MS2). The refrigerant in the second muffler space (MS2) flows into the first muffler space (MS1) through the internal flow path. The refrigerant in the first muffler space (MS1) flows into the primary space (S1), passes through the motor (3), and then enters the secondary space (S2). The refrigerant in the secondary space (S2) is discharged outside the casing (2) through the discharge pipe (4).

### -Injection Pipe-

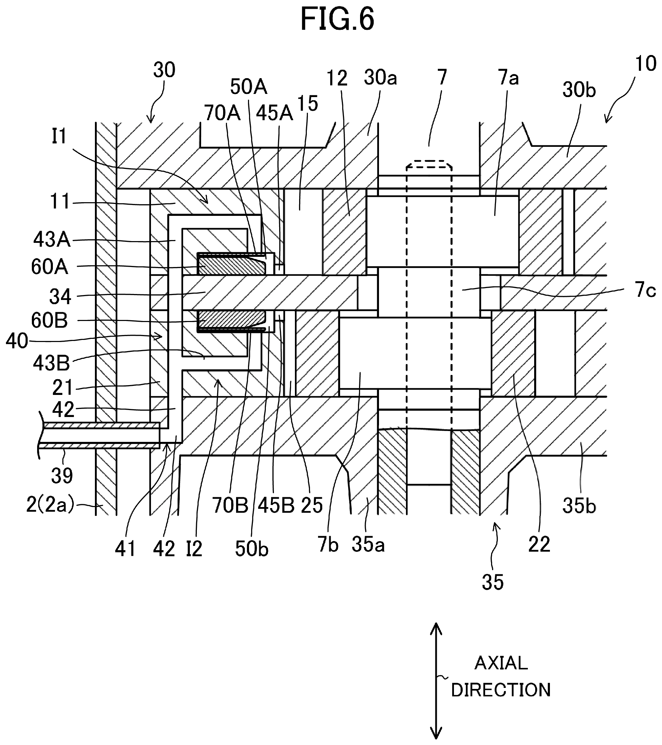

As illustrated in FIG. 6, the compressor (1) includes an injection pipe (39). The injection pipe (39) is attached to the lower portion of the barrel (2a). The injection pipe (39) penetrates the barrel (2a) in the radial direction. An outlet end of the injection pipe (39) is connected to the compression mechanism (10). The injection pipe (39) of this example is connected to the second flange portion (35b) of the second bearing (35). The intermediate flow path (108) of the refrigerant circuit (101) shown in FIG. 1 is connected to an inlet end of the injection pipe (39). The outlet end of the injection pipe (39) is connected to an injection flow path (41) formed in the compression mechanism (10).

### -Injection Mechanism-

As illustrated in FIG. 6, the compressor (1) includes an injection mechanism (40) for introducing an intermediate-pressure refrigerant into the compression chambers (15b, 25b). Carbon dioxide as the refrigerant fills the refrigerant circuit (101). In the refrigerant circuit (101), a refrigeration cycle (so-called supercritical cycle) where the high pressure is equal to or higher than the critical pressure is performed. The intermediate pressure corresponds to a pressure between the low pressure and high pressure of the refrigerant circuit (101). In other words, the intermediate pressure corresponds to a pressure between the suction pressure and discharge pressure of the compressor (1). The intermediate-pressure refrigerant is a gas-liquid two-phase refrigerant. The intermediate-pressure refrigerant may be a liquid refrigerant or a gas refrigerant. The injection mechanism (40) is provided in the compression mechanism (10).

The injection mechanism (40) of the present embodiment includes a first injection element (I1) and a second injection element (I2). The first injection element (I1) introduces the intermediate-pressure refrigerant into the first compression chamber (15b) of the first cylinder chamber (15). The second injection element (I2) introduces the intermediate-pressure refrigerant into the second compression chamber (25b) of the second cylinder chamber (25). The first injection element (I1) includes a first valve chamber (50A), a first reed valve (70A), a first valve retainer (60A), a first branch flow path (43A), and a first introduction passage (45A). The second injection element (I2) includes a second valve chamber (50B), a second reed valve (70B), a second valve retainer (60B), a second branch flow path (43B), and a second introduction passage (45B).

### <Injection Flow Path>

The injection flow path (41) is a flow path for sending the intermediate-pressure refrigerant in the injection pipe (39) to the compression chambers (15b, 25b). As illustrated in FIG. 6, the injection flow path (41) of the present embodiment branches into two paths and communicates with both the first compression chamber (15b) and the second compression chamber (25b). The injection flow path (41) includes a main flow path (42), the first branch flow path (43A), the second branch flow path (43B), the first valve chamber (50A), the second valve chamber (50B), the first introduction passage (45A), and the second introduction passage (45B). An inlet end of the main flow path (42) is connected to the injection pipe (39). The first branch flow path (43A) allows the main flow path (42) and the first valve chamber (50A) to communicate with each other. The second branch flow path (43B) allows the main flow path (42) and the second valve chamber (50B) to communicate with each other. The first introduction passage (45A) allows the first valve chamber (50A) and the first compression chamber (15b) to communicate with each other. The second introduction passage (45B) allows the second valve chamber (50B) and the second compression chamber (25b) to communicate with each other. In the present embodiment, the main flow path (42), the first branch flow path (43A), and the second branch flow path (43B) constitute a first flow path, and the first introduction passage (45A) and the second introduction passage (45B) constitute a second flow path.

The main flow path (42) is formed in the second bearing (35). The main flow path (42) extends from the injection pipe (39) toward the drive shaft (7), and further extends in the axial direction through the second bearing (35) and the second cylinder (21). The first branch flow path (43A) extends in the axial direction from the outlet end of the main flow path (42) through the second cylinder (21), the intermediate plate (34), and the first cylinder (11). Further, the first branch flow path (43A) extends toward the drive shaft (7) in the first cylinder (11), and then extends in the axial direction to the first valve chamber (50A). The second branch flow path (43B) extends from the outlet end of the main flow path (42) toward the drive shaft (7) in the second cylinder (21), and then extends in the axial direction to the second valve chamber (50B).

The first valve chamber (50A) is formed in the first cylinder (11). Specifically, the first valve chamber (50A) is formed in a recess-shaped groove formed in an end face facing the intermediate plate (34) (lower end face) in the axial direction. The first valve chamber (50A) houses the first valve retainer (60A) and the first reed valve (70A). The second valve chamber (50B) is formed in the second cylinder (21). Specifically, the second valve chamber (50B) is formed in a recess-shaped groove formed in an end face facing the intermediate plate (34) (upper end face) in the axial direction. The second valve chamber (50B) houses the second valve retainer (60B) and the second reed valve (70B).

The first introduction passage (45A) extends from the first valve chamber (50A) toward the inner peripheral surface of the first cylinder (11). An outlet end of the first introduction passage (45A) opens toward the first cylinder chamber (15). The second introduction passage (45B) extends from the second valve chamber (50B) toward the inner peripheral surface of the second cylinder (21). An outlet end of the second introduction passage (45B) opens toward the second cylinder chamber (25).

### -Details of Injection Elements-

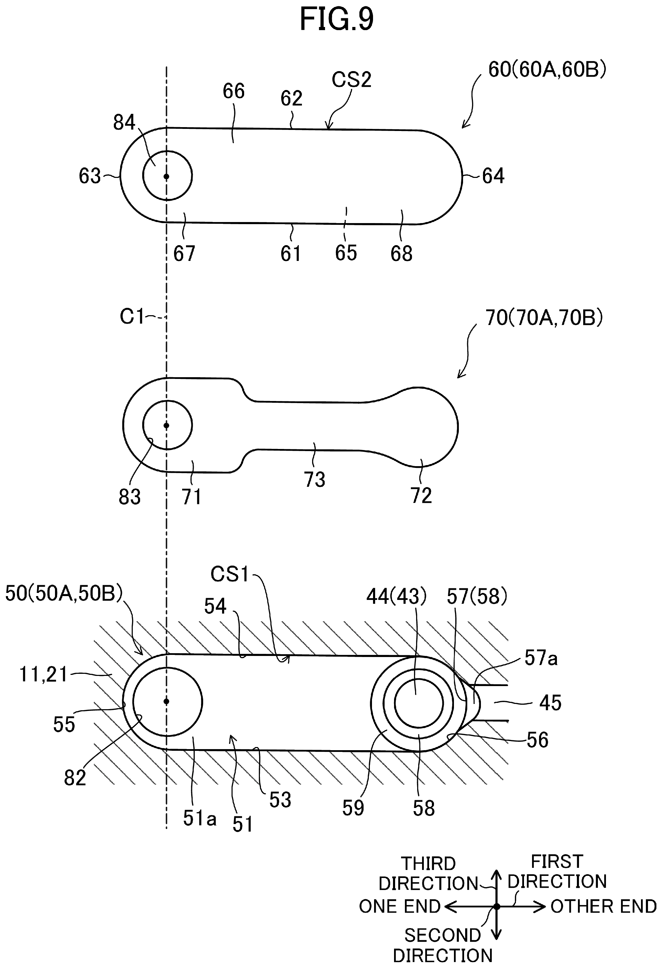

Details of the injection elements (I1, I2) will be described with reference to FIGS. 6 to 11. The first injection element (I1) and the second injection element (I2) have the same basic configuration. Thus, in the following description, the first valve chamber (50A) and the second valve chamber (50B) may be collectively referred to as a valve chamber (50), the first valve retainer (60A) and the second valve retainer (60B) may be collectively referred to as a valve retainer (60), the first reed valve (70A) and the second reed valve (70B) may be collectively referred to as a reed valve (70), the first branch flow path (43A) and the second branch flow path (43B) may be collectively referred to as a branch flow path (43), and the first introduction passage (45A) and the second introduction passage (45B) may be referred to as an introduction passage (45).

In the following description, a first direction is the longitudinal direction of the reed valve (70), a second direction is the thickness direction of the reed valve (70), and a third direction is a width direction of the reed valve (70) orthogonal to the first and second directions. The first direction corresponds to the longitudinal direction of the valve retainer (60). The second direction corresponds to the thickness direction of the valve retainer (60). The third direction corresponds to the width direction of the valve retainer (60). One end in the first direction corresponds to the fixed side of the reed valve (70) (a base portion (71)). The other end in the first direction corresponds to the movable side of the reed valve (70) (the tip portion (72)).

### <Valve Chamber>

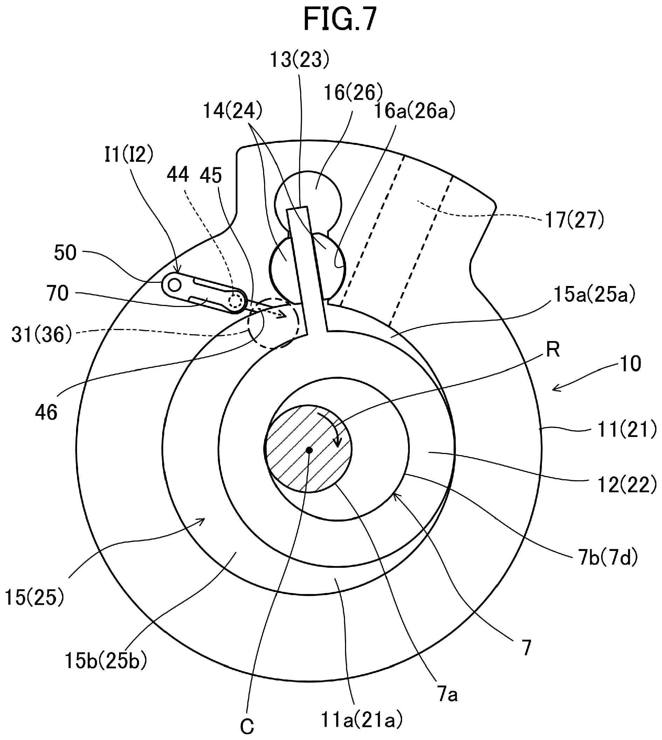

The valve chamber (50) is formed in the cylinder (11, 21). As illustrated in FIG. 7, the valve chamber (50) is disposed across the vane receiving hole (16, 26) from the suction port (17, 27) when viewed in the axial direction. The valve chamber (50) is disposed near the discharge port (31, 36). The valve chamber (50) houses the valve retainer (60) and the reed valve (70). The valve chamber (50) extends in the first direction toward the cylinder chamber (15, 25). As illustrated in FIGS. 7 to 9, the valve chamber (50) of the present embodiment is formed in an oval shape as viewed in the second direction. The valve chamber (50) of the present embodiment is defined by an inner surface forming the recess-shaped groove and the intermediate plate (34) closing the opening of the recess-shaped groove. The inner surface forming the valve chamber (50) includes a bottom surface (51) which is a first surface and a closing surface (52) which is a second surface. The bottom surface (51) is a surface at the bottom of the recess-shaped groove. The closing surface (52) is a surface of the intermediate plate (34) facing the inside of the recess-shaped groove, and faces the bottom surface (51) in the second direction. In other words, the closing surface (52) is located at one end of the valve chamber (50) in the second direction, and the bottom surface (51) is located at the other end in the second direction.

The inner surface forming the valve chamber (50) includes an inner peripheral surface (CS1) extending between the bottom surface (51) and the closing surface (52). **In** the present embodiment, the inner peripheral surface (CS1) is formed in an oval shape with the first direction as the longitudinal direction when viewed in the second direction. The inner peripheral surface (CS1) includes a first inner side surface (53), a second inner side surface (54), a first inner end surface (55), and a second inner end surface (56). The first inner side surface (53) and the second inner side surface (54) face each other in the third direction. The first inner side surface (53) and the second inner side surface (54) are flat surfaces extending in the first direction. **In** other words, the first inner side surface (53) and the second inner side surface (54) extend linearly and are parallel to each other when viewed in the second direction. The first inner end surface (55) is formed at one end of the valve chamber (50) in the first direction. The second inner end surface (56) is formed at the other end of the valve chamber (50) in the first direction. Each of the first inner end surface (55) and the second inner end surface (56) is formed in an arc shape that is convex outward as viewed in the second direction.

Each of the first inner side surface (53) and the second inner side surface (54) is entirely smooth and continuous as viewed in the second direction. The phrase "smooth and continuous" means that the surface is continuous with no steps or is tangentially continuous. **In** the present embodiment, the inner peripheral surface of the valve chamber (50) is entirely smooth and continuous.

The bottom surface (51) of the valve chamber (50) has a support surface (51a), a valve seat surface (58), and a recessed groove (59). The support surface (51a) is located closer to the one end of the valve chamber (50) in the first direction. The support surface (51a) supports a base portion (71) of the reed valve (70). The valve seat surface (58) is located closer to the other end of the valve chamber (50) in the first direction. The valve seat surface (58) is formed around an outflow port (44) of the branch flow path (43). The outflow port (44) is formed in a circular shape as viewed in the second direction. The valve seat surface (58) is formed in an annular shape surrounding the outflow port (44) as viewed in the second direction. The support surface (51a) and the valve seat surface (58) are formed on the same plane. The recessed groove (59) forms a space recessed from the bottom surface (51) toward the other end in the second direction. The bottom surface (51) of the valve chamber (50) will be described in detail later.

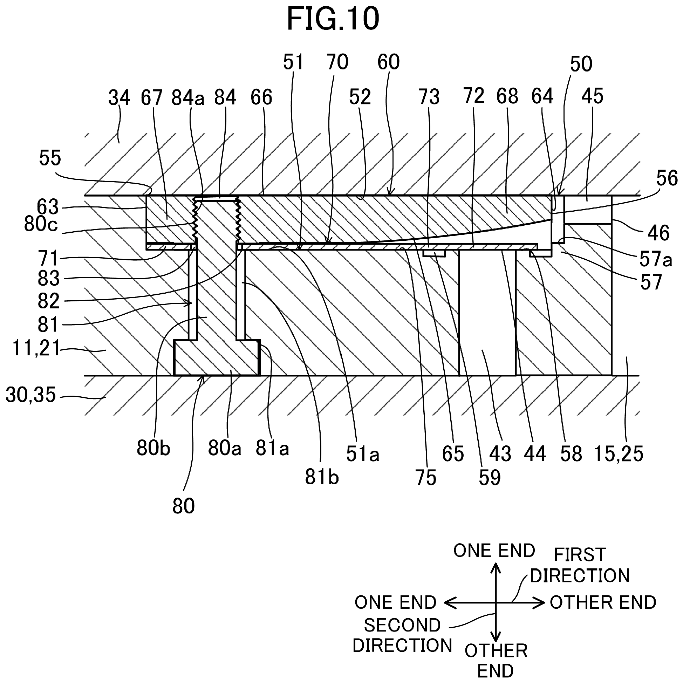

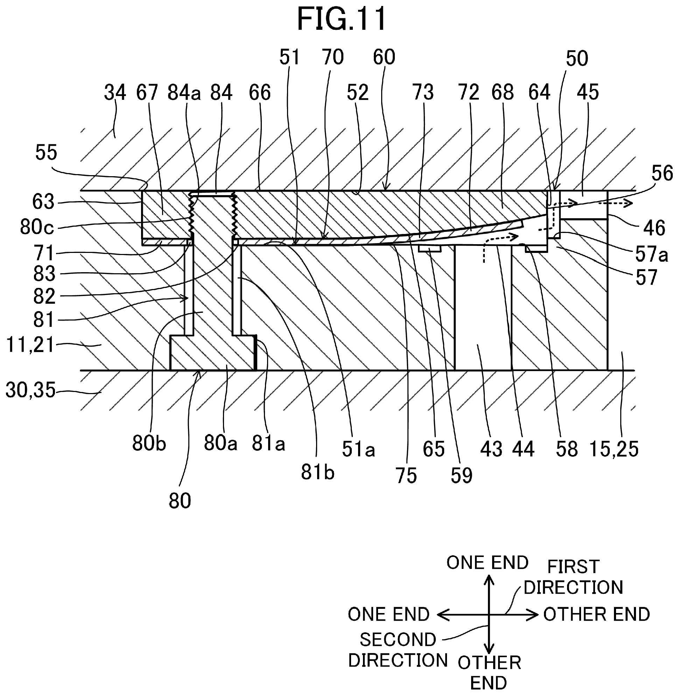

As illustrated in FIGS. 10 and 11, a step (57) is formed in a portion on the other end side of the bottom surface (51) in the first direction. The step (57) protrudes from the bottom surface of the recessed groove (59) toward the closing surface (52) in the second direction. A raised surface (57a) at one end of the step (57) in the second direction (a surface facing the closing surface (52)) is closer to the closing surface (52) than the support surface (51a) and the valve seat surface (58). The raised surface (57a) is fan-shaped or crescent-shaped when viewed in the second direction.

### <Valve Retainer>

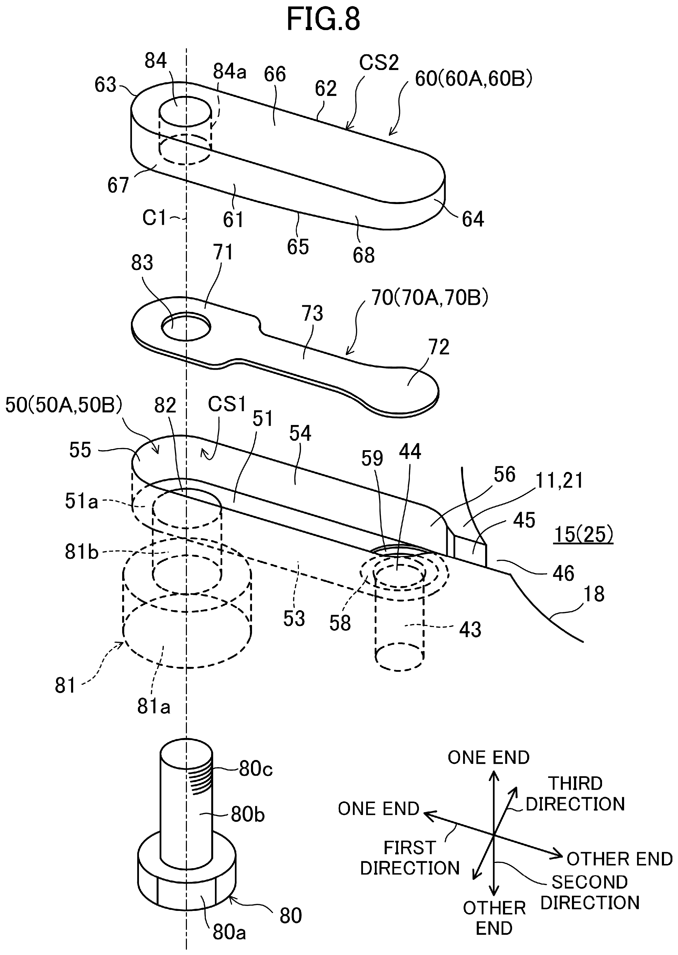

The valve retainer (60) shown in FIGS. 8 to 12 is disposed in the valve chamber (50) and extends in the first direction. The valve retainer (60) regulates the operation of the reed valve (70). The valve retainer (60) fits into the valve chamber (50) as viewed in the second direction. The term "fit" as used herein means that the valve retainer (60) fits into the valve chamber (50) substantially without any gap or with a slight gap. The "gap" as used herein is equal to or less than 1 mm, and preferably equal to or less than 0.1 mm.

The valve retainer (60) is formed in a shape similar to the inner surface of the valve chamber (50) as viewed in the second direction. The valve retainer (60) is formed in an oval shape extending in the first direction as viewed in the second direction. Specifically, the valve retainer (60) has a outer peripheral surface (CS2) corresponding to the inner peripheral surface (CS1). The outer peripheral surface (CS2) includes a first side surface (61), a second side surface (62), a first end surface (63), and a second end surface (64). The first side surface (61) is a flat surface parallel to the first inner side surface (53). The second side surface (62) is a flat surface parallel to the second inner side surface (54). The first end surface (63) is curved along the first inner end surface (55). The second end surface (64) is curved along the second inner end surface (56).

Each of the first side surface (61) and the second side surface (62) is entirely smooth and continuous as viewed in the second direction. In the present embodiment, the outer peripheral surface of the valve retainer (60) is entirely smooth and continuous.

The valve retainer (60) has a valve facing surface (65) facing the reed valve (70) in the second direction. The valve retainer (60) has a back surface (66) facing opposite to the reed valve (70) in the second direction.

The valve retainer (60) includes a fixing portion (67) and a contact portion (68). The fixing portion (67) is formed a portion on one end side of the valve retainer (60) in the first direction. The contact portion (68) extends from a middle portion to a portion on the other end side of the valve retainer (60) in the first direction. The fixing portion (67) overlaps the base portion (71) of the reed valve (70) and the support surface (51a) as viewed in the second direction. The contact portion (68) extends in the first direction over the tip portion (72) and a neck portion (73) of the reed valve (70).

The valve retainer (60) is formed into a boat shape in a cross-sectional view perpendicular to the third direction. The contact portion (68) of the valve retainer (60) has a thickness in the second direction gradually increasing from the other end to the one end in the first direction. The thickness of the fixing portion (67) of the valve retainer (60) in the second direction is substantially uniform. The fixing portion (67) has a greater thickness in the second direction than the contact portion (68).

### <Reed Valve>

The reed valve (70) shown in FIGS. 7 to 11 is disposed between the valve retainer (60) and the bottom surface (51) of the valve chamber (50). The reed valve (70) is formed in a plate shape having a thickness in the second direction. The reed valve (70) is made of an elastic metal material. The reed valve (70) extends in the first direction along the valve retainer (60). The shape of the reed valve (70) differs between a closed state shown in FIG. 10 and an open state shown in FIG. 11. The reed valve (70) includes the base portion (71) at one end in the first direction, the tip portion (72) at the other end in the first direction, and the neck portion (73) connecting the base portion (71) and the tip portion (72).

The base portion (71) is sandwiched between the support surface (51a) and the fixing portion (67) of the valve retainer (60). In other words, the base portion (71) is fixed in the valve chamber (50). Both side surfaces of the base portion (71) in the third direction and an end surface of the base portion (71) at one end in the first direction fit with the valve chamber (50) as viewed in the second direction. The base portion (71) is sandwiched between the valve facing surface (65) of the fixing portion (67) of the valve retainer (60) and the support surface (51a).

The tip portion (72) constitutes a valve body of the reed valve (70). The tip portion (72) overlaps the valve seat surface (58) as viewed in the second direction. The tip portion (72) is formed in a circular shape having a larger diameter than the outflow port (44) when viewed in the second direction. The tip portion (72) has a narrower width in the third direction than the base portion (71). The tip portion (72) has a shorter length in the first direction than the base portion (71).

The neck portion (73) constitutes the movable portion. The neck portion (73) extends in the first direction from the base portion (71) to the tip portion (72). The neck portion (73) changes its angle between the bottom surface (51) forming the valve chamber (50) and the valve facing surface (65) of the valve retainer (60) using its end toward the base portion (71) as a fulcrum. The neck portion (73) is not in contact with the valve retainer (60) when the reed valve (70) is closed, and is in contact with the valve retainer (60) when the reed valve (70) is open.

When the reed valve (70) is closed as shown in FIG. 10, the tip portion (72) is in contact with the valve seat surface (58). Then, the outflow port (44) is closed by the tip portion (72). When the reed valve (70) is open as shown in FIG. 11, the neck portion (73) and the tip portion (72) are in contact with the contact portion (68) of the valve retainer (60). Then, the outflow port (44) opens, and the outflow port (44) and the introduction passage (45) communicate with each other via the valve chamber (50).

### <Structure Related to Fastening Member>

The injection mechanism (40) includes a fastening member (80) for fastening the valve retainer (60) and the reed valve (70) to the cylinder (11, 21). The fastening member (80) of the present embodiment is a bolt.

The fastening member (80) includes a head (80a) and a shaft (80b) extending from the head (80a) toward one end in the second direction. The head (80a) has a larger diameter than the shaft (80b). The axis of the head (80a) and the axis of the shaft (80b) substantially coincide with each other. A threaded portion (80c) is formed on a peripheral surface of a tip portion of the shaft (80b) (in a portion on one end side of the shaft (80b) in the second direction).

The cylinder (11, 21) has a receiving hole (81) through which the fastening member (80) is inserted. The receiving hole (81) extends in the second direction from an end surface of the cylinder (11, 21) facing the bearing (30, 35) toward the valve chamber (50). The receiving hole (81) includes a first space (81a) for receiving the head (80a) and a second space (81b) through which the shaft (80b) is inserted. The first space (81a) and the second space (81b) form a cylindrical space. The bottom surface (51) has a bottom surface hole (82) which is an opening at the tip of the receiving hole (81) (strictly, the first space (81a)). A valve hole (83) is formed in the base portion (71) of the reed valve (70). A fastening hole (84) is formed in the fixing portion (67) of the valve retainer (60). The fastening hole (84) penetrates the valve retainer (60) in the second direction. A thread groove (84a) corresponding to the threaded portion (80c) is formed on an inner peripheral surface of the fastening hole (84).

The receiving hole (81), the bottom surface hole (82), the valve hole (83), and the fastening hole (84) overlap each other as viewed in the second direction. Each of the receiving hole (81), the bottom surface hole (82), the valve hole (83), and the fastening hole (84) is formed in a substantially circular shape as viewed in the second direction. The receiving hole (81), the bottom surface hole (82), the valve hole (83), and the fastening hole (84) are coaxial with each other and have a common axis (first axis (C1)). When b1 represents the inner diameter of the first space (81a), b2 represents the inner diameter of the second space (81b), b3 represents the inner diameter of the bottom surface hole (82), b4 represents the inner diameter of the valve hole (83), and b5 represents the inner diameter of the fastening hole (84), b1 > b2 = b3 > b4 > b5 is satisfied.

When the threaded portion (80c) of the fastening member (80) is engaged with the thread groove (84a), the head (80a) is located in the first space (81a), and the shaft (80b) is located in the second space (81b), the bottom surface hole (82), the valve hole (83), and the fastening hole (84). When the fastening member (80) is tightened, the valve retainer (60) is fixed to the cylinder (11, 21). Further, the reed valve (70) is fixed between the fixing portion (67) of the valve retainer (60) and the support surface (51a).

### -Operation of Injection Mechanism-

The operation of the injection mechanism (40) will be described. As illustrated in FIG. 7, when the compression chamber (15b, 25b) has a relatively large volume and an internal pressure of the compression chamber (15b, 25b) is lower than the intermediate pressure, the pressure of the valve chamber (50) communicating with the compression chamber (15b, 25b) falls below the intermediate pressure. In this case, as illustrated in FIG. 11, the reed valve (70) opens, and the outflow port (44) opens. As a result, the intermediate-pressure refrigerant in the injection pipe (39) is supplied to the compression chamber (15b, 25b) through the injection flow path (41). Specifically, when the first reed valve (70A) opens, the refrigerant in the injection pipe (39) flows through the main flow path (42), the first branch flow path (43A), the first valve chamber (50A), and the first introduction passage (45A) in this order, and is supplied to the first compression chamber (15b). When the second reed valve (70B) opens, the refrigerant in the injection pipe (39) flows through the main flow path (42), the second branch flow path (43B), the second valve chamber (50B), and the second introduction passage (45B) in this order, and is supplied to the second compression chamber (25b).

Thereafter, when the volume of the compression chamber (15b, 25b) decreases with the eccentric rotation of the roller (12, 22) and the internal pressure of the compression chamber (15b, 25b) exceeds the intermediate pressure, the pressure of the valve chamber (50) communicating with the compression chamber (15b, 25b) exceeds the intermediate pressure. In this case, as illustrated in FIG. 10, the reed valve (70) is closed, and the outflow port (44) is closed. As a result, the intermediate-pressure refrigerant in the injection pipe (39) is not supplied to the compression chamber (15b, 25b). Specifically, when the first reed valve (70A) is closed, the outflow port (44) of the first branch flow path (43A) is blocked by the tip portion (72) of the first reed valve (70A). When the second reed valve (70B) is closed, the outflow port (44) of the second branch flow path (43B) is blocked by the tip portion (72) of the second reed valve (70B).

In this manner, when the compressor (1) is operating, an operation of the supply of the intermediate-pressure refrigerant to the first compression chamber (15b) and an operation of stopping the supply of the intermediate-pressure refrigerant to the first compression chamber (15b) are alternately performed in the first injection element (I1). At the same time, an operation of the supply of the intermediate-pressure refrigerant to the second compression chamber (25b) and an operation of stopping the supply of the intermediate-pressure refrigerant to the second compression chamber (25b) are alternately performed in the second injection element (I2).

### -Features Related to Bottom Surface of Valve Chamber and Reed Valve-

The injection operation described above allows the injection pipe (39), the introduction passage (45), and the cylinder chamber (15, 25) to communicate with each other when the reed valve (70) is open. In this state, if the introduction passage (45) and the suction port (17, 27) communicate with each other through the cylinder chamber (15, 25) (strictly, the suction chamber (15a, 25a)), the intermediate-pressure refrigerant flows toward the suction port (17, 27). This lowers the volumetric efficiency of the compressor (1), and the coefficient of performance (COP) of the air conditioner (100) decreases. In particular, when the roller (12, 22) approaches the vane receiving hole (16, 26), that is, when the rotational angle of the roller (12, 22) approaches 0°, the introduction passage (45) and the suction port (17, 27) are more likely to communicate with each other. This causes the decrease in COP more significantly. Features related to this problem will be described below.

### <Details of Reed Valve>

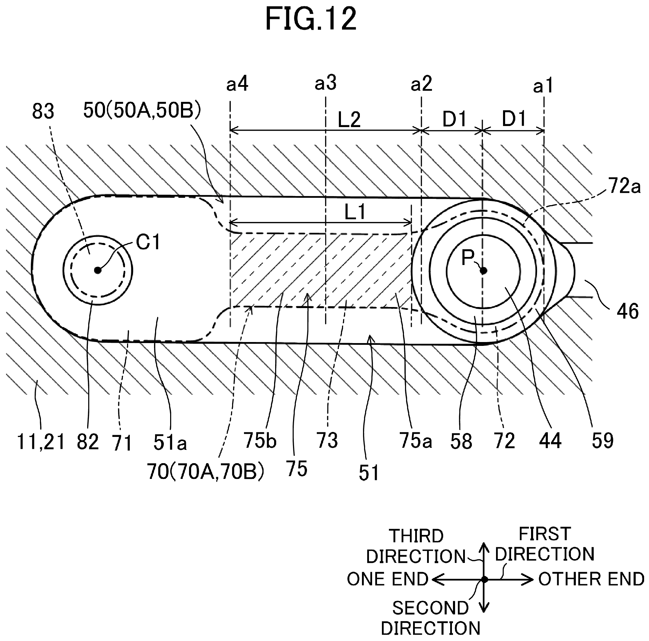

As illustrated in FIG. 12, the tip portion (72) of the reed valve (70) is formed in an area from a first point (a1) to a second point (a2). The first point is the position of the other end of the tip portion (72) in the first direction as viewed in the second direction. The first point (a1) is located away from the center (P) of the outflow port (44) toward the other end in the first direction by a first distance (D1) as viewed in the second direction. The second point (a2) is located away from the center (P) of the outflow port (44) toward the one end in the first direction by the first distance (D1) as viewed in the second direction. The center (P) of the outflow port (44) corresponds to the midpoint (axial center) of the outflow port (44) as viewed in the second direction.

The neck portion (73) is formed in an area of the reed valve (70) from the second point (a2) to the other end of the base portion (71) (a fourth point (a4) in FIG. 12). The base portion (71) is in contact with the valve retainer (60) when the reed valve (70) is in both the closed state and the open state. In contrast, the neck portion (73) is separated from the valve retainer (60) when the reed valve (70) is closed, and is in contact with the valve retainer (60) when the reed valve (70) is open. In other words, the base portion (71) remains fixed whether the reed valve (70) is open or closed, whereas the neck portion (73) moves with the opening and closing of the reed valve (70).

The neck portion (73) has a narrower width in the third direction than the base portion (71). The tip portion (72) has a narrower width in the third direction than the base portion (71) and a greater width in the third direction than the neck portion (73).

### <Recessed Groove and Contact Surface>

As illustrated in FIGS. 8 to 12, the bottom surface (51) of the valve chamber (50) has a recessed groove (59). The recessed groove (59) is formed around the valve seat surface (58). The recessed groove (59) of the present embodiment surrounds the entire circumference of the valve seat surface (58). Specifically, the recessed groove (59) is formed in an annular shape surrounding the entire circumference of the valve seat surface (58). The width of the recessed groove (59) in the radial direction is greater than the depth of the recessed groove (59) in the second direction. In the present embodiment, the center of the recessed groove (59) coincides with the center (P) of the outflow port (44). The center of the valve seat surface (58) coincides with the center (P) of the outflow port (44).

As illustrated in FIG. 12, the recessed groove (59) overlaps an outer edge (72a) of the tip portion (72) as viewed in the second direction. Thus, when the reed valve (70) is closed, the outer edge (72a) of the tip portion (72) is not in contact with the bottom surface (51). The outer edge (72a) of the tip portion (72) includes the other end of the tip portion (72) in the first direction and both ends in the third direction when viewed in the second direction. In other words, the outer edge (72a) of the tip portion (72) of the present embodiment is formed in a C-shape as viewed in the second direction. The outer edge of the recessed groove (59) is formed along the inner peripheral surface forming the valve chamber (50).

As illustrated in FIGS. 10 to 12, the bottom surface (51) of the valve chamber (50) has a contact surface (75) that is in contact with the neck portion (73) of the reed valve (70) in the closed state. In FIG. 12 and FIGS. 13 and 14, which will be described in detail later, an area constituting the contact surface (75) is hatched with broken lines and solid lines. The contact surface (75) is formed on the bottom surface (51) of the present embodiment over substantially the entire area from the base portion (71) to the second point (a2).

The contact surface (75) includes a distal contact surface (75a) that is in contact with a predetermined portion of the neck portion (73) from an intermediate point (a3) to the tip portion (72). The intermediate point (a3) is a half point in the first direction of the neck portion (73) of the reed valve (70) in the closed state. The contact surface (75) further includes a proximal contact surface (75b) that is in contact with a predetermined portion from the intermediate point (a3) to the base portion (71).

A first length (L1) which is the entire length of the contact surface (75) in the first direction is greater than 1/2 of a second length (L2) which is the entire length of the neck portion (73) in the first direction. The first length (L1) is preferably greater than 3/4 of the second length (L2).

In the present embodiment, the contact surface (75) includes an intermediate contact surface that is in contact with an intermediate area of the neck portion (73) in the third direction. The contact surface (75) of the present embodiment extends across both ends of the neck portion (73) in the third direction.

### <Function of Contact Surface>

The oil supply mechanism (8) supplies oil for lubrication to the cylinder chamber (15, 25). A refrigerating machine oil containing any one of polyalkylene glycol (PAG), polyvinyl ether (PVE), or polyol ester (POE) as a main component is preferably used as the oil. When the reed valve (70) is closed, the oil in the cylinder chamber (15, 25) flows into the valve chamber (50) through the introduction passage (45). Thus, the oil is present on the bottom surface (51) of the valve chamber (50).

When the reed valve (70) is closed, the oil is present between the neck portion (73) and the contact surface (75). When the reed valve (70) is about to open from this state, the neck portion (73) is less likely to move toward the valve retainer (60) due to the surface tension of the oil on the contact surface (75). This delays the timing of opening the reed valve (70). As a result, when the introduction passage (45) and the suction port (17, 27) communicate with each other through the cylinder chamber (15, 25), the reed valve (70) is not fully open, or the reed valve (70) remains closed. This can substantially prevent the intermediate-pressure refrigerant in the injection pipe (39) from flowing toward the suction port (17, 27) through the cylinder chamber (15, 25).

### -Advantages of Embodiments-

In the present embodiment, the bottom surface (51) forming the valve chamber (50) has the contact surface (75) that is in contact with the neck portion (73) of the reed valve (70) in the closed state. Thus, the timing of opening the reed valve (70) can be delayed by the surface tension of the oil, substantially preventing the intermediate-pressure refrigerant from flowing toward the suction port (17, 27). This can improve the volumetric efficiency of the compressor (1), and the COP of the air conditioner (100) as well.

If the recessed groove (59) is formed in the entire area of the bottom surface (51) that overlaps the neck portion (73) as viewed in the second direction, the recessed groove (59) becomes a dead volume, and the volumetric efficiency decreases. In contrast, in the present embodiment, the contact surface (75) is formed to overlap the neck portion (73) as viewed in the second direction. That is, the recessed groove (59) is not formed in the entire area of the bottom surface (51) overlapping the neck portion (73) as viewed in the second direction, reducing the dead volume caused by the recessed groove (59).

In the present embodiment, the recessed groove (59) and the outer edge (72a) of the tip portion (72) overlap each other as viewed in the second direction. Thus, when the tip portion (72) comes into contact with the valve seat surface (58) at the closing of the reed valve (70), the outer edge (72a) of the tip portion (72) does not make contact with the valve seat surface (58). Further, when the tip portion (72) comes into contact with the valve seat surface (58), the outer edge (72a) of the tip portion (72) is elastically deformed into the recessed groove (59). Thus, the concentration of stress at the tip portion (72) can be reduced. This can reduce fatigue failure of the tip portion (72) due to repeated opening and closing of the reed valve (70).

In particular, the recessed groove (59) surrounds the entire circumference of the valve seat surface (58). The recessed groove (59) and the entire outer edge (72a) of the tip portion (72) overlap each other as viewed in the second direction. This can further reduce the stress concentration at the tip portion (72). The recessed groove (59) is formed in an annular shape and provided only around the valve seat surface (58) of the bottom surface (51), reducing the dead volume caused by the recessed groove (59). This also makes the processing of the recessed groove (59) easy.

The contact surface (75) of the present embodiment includes the distal contact surface (75a). The distal contact surface (75a) is in contact with a predetermined portion of the neck portion (73) from the intermediate point (a3) to the tip portion (72). The distal contact surface (75a) is in contact with an area of the neck portion (73) far from the fulcrum (base portion (71)), and the neck portion (73) is less likely to move toward the valve retainer (60) than when the neck portion (73) is in contact with the proximal contact surface (75b) only. This can further delay the timing of opening the reed valve (70).

In the present embodiment, the first length (L1) which is the entire length of the contact surface (75) in the first direction is greater than 1/2 of the second length (L2) which is the entire length of the neck portion (73) in the first direction. Thus, the neck portion (73) is less likely to move toward the valve retainer (60) due to the surface tension of the oil. This can further delay the timing of opening the reed valve (70). The dead volume caused by the recessed groove (59) can be further reduced.

The refrigerant of this embodiment is carbon dioxide. In a refrigeration cycle using carbon dioxide, the pressure of the refrigerant circuit (101) is relatively high, and the refrigerant pressure in the valve chamber (50) is also high. As a result, the volumetric efficiency is likely to decrease due to the dead volume in the valve chamber (50). However, in the present embodiment, the recessed groove (59) is not formed in the entire area of the bottom surface (51) corresponding to the neck portion (73), minimizing a significant decrease of the volumetric efficiency due to the dead volume of the recessed groove (59).

### -Variations-

The embodiment may be modified as follows. In the following description, the differences from the above embodiment will be described.

### <First Variation>

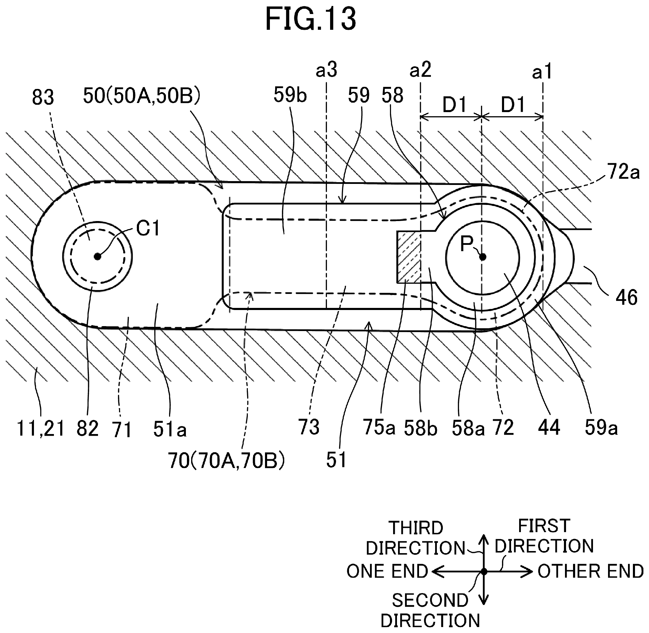

An injection mechanism (40) of a first variation illustrated in FIG. 13 is different from that of the embodiment in the shapes of the valve seat surface (58) and the recessed groove (59). The valve seat surface (58) includes an annular portion (58a) and a protrusion (58b) extending from the annular portion (58a) toward the one end in the first direction. The annular portion (58a) is formed in an annular shape surrounding the outflow port (44). The protrusion (58b) is formed in a rectangular shape when viewed in the second direction. An extension portion (59b) extends over both the tip portion (72) and the neck portion (73) as viewed in the second direction.

The recessed groove (59) includes an arc portion (59a) surrounding the annular portion (58a) and the extension portion (59b) extending from the arc portion (59a) toward the one end in the first direction. The arc portion (59a) is formed in a C-shape with the one end open as viewed in the second direction. The extension portion (59b) extends from the arc portion (59a) to the base portion (71). In other words, the extension portion (59b) overlaps the tip portion (72), the neck portion (73), and the base portion (71) as viewed in the second direction. The extension portion (59b) is formed in a substantially rectangular shape that is long in the first direction when viewed in the second direction. Both ends of the extension portion (59b) in the third direction are located outside the neck portion (73) in the third direction.

In the first variation, the contact surface (75) that comes into contact with the neck portion (73) of the reed valve (70) in the closed state is formed at the one end of the extension portion (59b) in the second direction. The contact surface (75) of the first variation constitutes a distal contact surface (75a) that is in contact with a predetermined portion of the neck portion (73) from the intermediate point (a3) to the tip portion (72).

Also in the first variation, when the reed valve (70) opens, the neck portion (73) is less likely to move toward the valve retainer (60) due to the surface tension of the oil on the contact surface (75). This can delay the timing of opening the reed valve (70), substantially preventing the intermediate-pressure refrigerant from flowing toward the suction port (17, 27).

### <Second Variation>

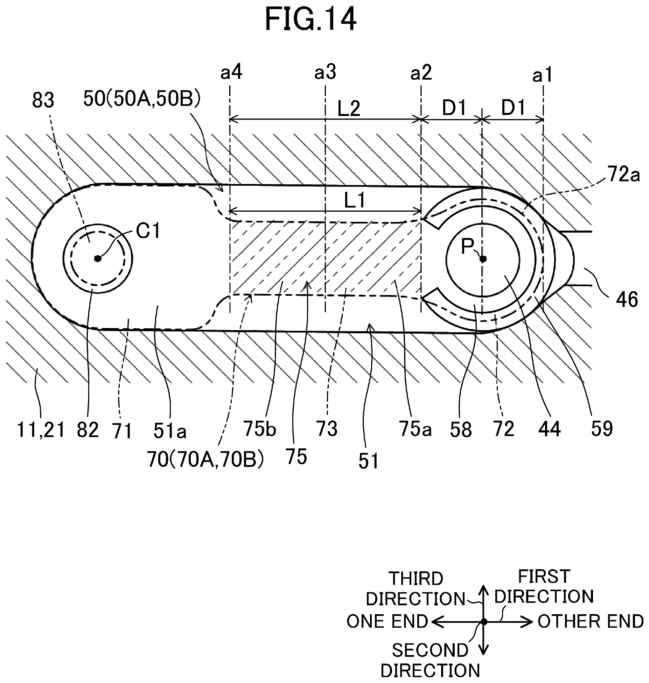

An injection mechanism (40) of a second variation shown in FIG. 14 is different from that of the embodiment in the shape of the recessed groove (59). The recessed groove (59) is formed in an arc shape. Specifically, the recessed groove (59) is formed in a C-shape with one end open as viewed in the second direction. A portion on one end side of the recessed groove (59) in the first direction substantially coincides with the second point (a2) as viewed in the second direction.

In the second variation, the recessed groove (59) is not formed in an area of the bottom surface (51) overlapping the neck portion (73) as viewed in the second direction. In other words, the bottom surface (51) has a contact surface (75) that is in contact with the entire neck portion (73). Thus, the first length (L1) of the contact surface (75) in the first direction is substantially equal to the second length (L2) of the neck portion (73) in the first direction.

Also in the second variation, when the reed valve (70) opens, the neck portion (73) is less likely to move toward the valve retainer (60) due to the surface tension of the oil on the contact surface (75). This can delay the timing of opening the reed valve (70), substantially preventing the intermediate-pressure refrigerant from flowing toward the suction port (17, 27). In the second variation, the recessed groove (59) is much smaller than that of the embodiment, reducing the dead volume.

### <Other Embodiments>

The air conditioner (100) may perform only the cooling operation or the heating operation. The refrigeration cycle apparatus may be a refrigeration apparatus that cools the inside of a storage, a hot water supply unit that generates hot water, or a chilling unit that generates cold water.

The compressor (1) may be a rolling piston rotary compressor. In this case, the roller and the vane of the compression mechanism are formed separately. The tip of the vane is pressed against the outer peripheral surface of the roller. When the roller rotates eccentrically, the vane moves back and forth in the radial direction of the cylinder.

The compressor (1) may be a hinge-vane rotary compressor. In this case, the roller and the vane of the compression mechanism are formed separately. The tip of the vane is connected to the roller via a hinge. The vane is displaceable relative to the roller. When the roller rotates eccentrically, the vane moves back and forth in the radial direction of the cylinder.

The compression mechanism (10) may be a single-cylinder compression mechanism having one cylinder. In this case, the injection mechanism (40) has an injection element corresponding to the one cylinder.

The valve chamber (50) may be formed in the intermediate plate (34), the first bearing (30), or the second bearing (35), instead of the cylinder (11, 21).

The second flow path that allows the valve chamber (50) and the compression chamber (15b, 25b) to communicate with each other need not entirely be the introduction passage (45) extending toward the inner peripheral surface of the cylinder (11, 21), and may include another flow path. The other flow path may be a flow path extending in the axial direction, the radial direction, or the rotational direction, or may be formed in the first bearing (30), the second bearing (35), or the intermediate plate (34). The introduction passage (45) may extend in the radial direction.

The bottom surface (51) forming the valve chamber (50) may have two or more contact surfaces (75). In this case, a groove is formed between the adjacent contact surfaces (75). In this case, the first length (L1) is the sum of the lengths of the contact surfaces (75) in the first direction. The contact surface (75) may include only the proximal contact surface (75b).

The refrigerant need not be carbon dioxide, and may be, for example, an HFC-based refrigerant.

### <Additional Remarks>

While the embodiments and variations thereof have been described above, it will be understood that various changes in form and details may be made without departing from the spirit and scope of the claims. The embodiments, the variations thereof, and the other embodiments may be combined and replaced with each other without deteriorating intended functions of the present disclosure.

The expressions such as "first," "second," "third," ... , described above are used to distinguish the terms to which these expressions are given, and do not limit the number and order of the terms.

### INDUSTRIAL APPLICABILITY

As described above, the present disclosure is useful for a rotary compressor and a refrigeration cycle apparatus.

### DESCRIPTION OF REFERENCE CHARACTERS

- 8: Oil Supply Mechanism
- 10: Compression Mechanism
- 11, 21: Cylinder
- 12, 22: Roller
- 13, 23: Vane
- 15, 25: Cylinder Chamber
- 15a, 25a: Suction Chamber
- 15b, 25b: Compression Chamber
- 17, 27: Suction Port
- 39: Injection Pipe
- 40: Injection Mechanism
- 42, 43: First Flow Path
- 44: Outflow Port
- 45: Introduction Passage (Second Flow Path)
- 50: Valve Chamber
- 51: Bottom Surface (First Surface)
- 58: Valve Seat Surface
- 59: Recessed Groove (Groove)
- 60: Valve Retainer
- 70: Reed Valve
- 71: Base Portion
- 72: Tip Portion
- 72a: Outer edge
- 73: Neck Portion (Movable Portion)
- 75: Contact Surface
- 101: Refrigerant Circuit
- a1: First Point
- a2: Second Point
- a3: Intermediate Point
- D1: First Distance
- L1: First Length
- L2: Second Length
- P: Center

## Claims

1. A rotary compressor, comprising:
a drive shaft (7);
a compression mechanism (10) including an annular cylinder (11, 21), a roller (12, 22) configured to be driven by the drive shaft (7) and eccentrically rotate in the cylinder (11, 21), a vane (13, 23) configured to partition a cylinder chamber (15, 25) between the cylinder (11, 21) and the roller (12, 22) into a suction chamber (15a, 25a) and a compression chamber (15b, 25b), and a suction port (17, 27) configured to send a low-pressure refrigerant to the suction chamber (15a, 25a); and
an oil supply mechanism (8) configured to supply oil to the cylinder chamber (15, 25); and
an injection pipe (39), wherein
the compression mechanism (10) is provided with an injection mechanism (40) configured to introduce a refrigerant into the compression chamber (15b, 25b),
the injection mechanism (40) includes:
a valve chamber (50);
a first flow path (42, 43) that is configured to allow the injection pipe (39) and the valve chamber (50) to communicate with each other and has an outflow port (44) facing the valve chamber (50);
a reed valve (70) that is disposed in the valve chamber (50) and configured to open and close the outflow port (44) of the first flow path (42, 43);
a valve retainer (60) that is disposed in the valve chamber (50) and is configured to regulate an operation of the reed valve (70); and
a second flow path (45) that is configured to allow the valve chamber (50) and the cylinder chamber (15, 25) to communicate with each other,
the reed valve (70) extends in a first direction and has a thickness in a second direction,
the reed valve (70) includes:
a base portion (71) that is formed at one end of the reed valve (70) in the first direction and fixed to the valve retainer (60);
a tip portion (72) that is formed at the other end of the reed valve (70) in the first direction and configured to open and close the outflow port (44); and
a movable portion (73) that is configured to connect the base portion (71) and the tip portion (72) and is movable toward the valve retainer (60) together with the tip portion (72),
an inner surface forming the valve chamber (50) has a first surface (51) facing the valve retainer (60) in the second direction across the reed valve (70) and having the outflow port (44),
the first surface (51) includes:
a valve seat surface (58) that is configured to be in contact with the tip portion (72) of the reed valve (70) in a closed state; and
a groove (59) that is formed around the valve seat surface (58) and overlaps an outer edge (72a) of the tip portion (72) as viewed in the second direction,
with a point at an end of the tip portion (72) on the other end side of the reed valve (70) in the first direction being defined as a first point (a1), a distance from a center (P) of the outflow port (44) to the first point (a1) in the first direction being defined as a first distance (D1), and a point away from the center (P) of the outflow port (44) toward an end of the tip portion (72) on the one end side of the reed valve (70) in the first direction by the first distance (D1) being defined as a second point (a2) as viewed in the second direction,
the tip portion (72) is formed in an area of the reed valve (70) from the first point (a1) to the second point (a2), and
the first surface (51) has a contact surface (75) that is configured to be in contact with the movable portion (73) of the reed valve (70) in the closed state.

2. The rotary compressor of claim 1, wherein
the groove (59) surrounds the entire circumference of the valve seat surface (58).

3. The rotary compressor of claim 1 or 2, wherein
the contact surface (75) is configured to be in contact with a predetermined portion of the movable portion (73) from an intermediate point (a3) which is a half point in the first direction of the movable portion (73) of the reed valve (70) in the closed state to the tip portion (72).

4. The rotary compressor of any one of claims 1 to 3, wherein
a first length (L1) which is an entire length of the contact surface (75) in the first direction is greater than 1/2 of a second length (L2) which is an entire length of the movable portion (73) in the first direction.

5. The rotary compressor of any one of claims 1 to 4, wherein
the refrigerant is carbon dioxide.

6. A refrigeration cycle apparatus comprising a refrigerant circuit (101) including the rotary compressor (1) of any one of claims 1 to 5.
